# FASCICULE DE BREVET EUROPEEN

(11) **EP 2 132 540 B1**
(45) Date de publication et mention de la délivrance du brevet: **01.04.2015**
(21) Numéro de dépôt: 08761837.7
(22) Date de dépôt: 05.02.2008
(51) Int. Cl.: G01H 3/14

(54) **DISPOSITIF ET PROCEDE POUR EVALUER L'EXPOSITION SONORE D'UN INDIVIDU**
VORRICHTUNG UND VERFAHREN ZUR ERMITTLUNG DER SCHALLEXPOSITION EINES INDIVIDUUMS
DEVICE AND METHOD FOR EVALUATING THE SOUND EXPOSURE OF AN INDIVIDUAL

(30) Priorité: 06.02.2007 FR 0700829
(43) Date de publication de la demande: 16.12.2009
(73) Titulaire: DEVINANT R&D, 69006 Lyon (FR)
(72) Inventeur: Devinant, Frédéric, 69006 Lyon (FR)
(74) Mandataire: Myon, Gérard Jean-Pierre
(86) Numéro de dépôt international: PCT/FR2008/000133
(87) Numéro de publication internationale: WO 2008/107570

(56) Documents cités:
- EP-A- 1 693 655
- JP-A- 1 209 396
- US-A- 3 802 535

## Description

L'invention concerne un dispositif et un procédé pour évaluer l'exposition sonore d'un individu séjournant dans un ou plusieurs lieu(x) exposé(s) au bruit émis par au moins une source. L'objet de l'invention permet de diminuer les risques auditifs qu'occasionne le cumul de multiples expositions sonores sur l'individu lors de ses activités professionnelles et/ou de loisirs.

De manière connue, un tel cumul, réalisé sur une durée continue ou fractionnée, peut conduire à une surexposition sonore de l'individu et, par conséquent, à des troubles auditifs, voire à des pathologies.

Pour évaluer l'exposition sonore d'un individu, il existe des dispositifs individuels ou collectifs aptes à mesurer le bruit et à intégrer ces mesures sur la durée d'exposition. Dans la suite, les termes « son » et « bruit » sont indifféremment employés.

Un dispositif collectif mesure le niveau de bruit instantané et l'intègre pour évaluer le niveau sonore moyen équivalent L_{eq} (« Level équivalent ») ou L_{avg} (« Level average »). Un tel dispositif peut également mesurer le niveau de pression de crête Lpc (« Level peak ») ou Lₘₐₓ (« Level maximum ») du son sur une période. Cependant, un dispositif collectif, par définition, ne peut pas rendre compte de l'exposition sonore d'un individu séjournant dans le lieu où est réalisée la mesure de bruit, car il n'est pas informé, d'une part, de la durée de séjour de l'individu dans le lieu bruyant hors duquel le risque de surexposition disparaît et, d'autre part, de la position de cet individu par rapport à la ou les sources sonores, ce qui rend la mesure insuffisamment précise. Enfin, il lui est impossible de mesurer l'exposition d'individus séjournant dans le lieu bruyant de manière non concomitante.

On connaît par ailleurs des dispositifs individuels portatifs de type dosimètre de bruit, tels que celui décrit par US-A-3 802 535. Un tel dosimètre portatif comprend généralement un sonomètre-intégrateur mesurant le bruit ambiant auquel est exposé l'individu, et pouvant intégrer cette mesure de bruit sur la base de la durée du séjour de l'individu, fournissant ainsi une mesure précise de son exposition sonore, ou dose sonore. Cependant, un dosimètre de bruit s'avère relativement onéreux, encombrant et disgracieux, car il doit être porté par chaque individu au voisinage de ses oreilles. En outre, un tel dosimètre de bruit doit être alimenté électriquement par des accumulateurs, lesquels représentent un poids et un risque de défaillance non négligeables. D'autre part, un tel dosimètre est relativement fragile et doit être régulièrement ré-étalonné afin de fournir une mesure précise et fiable de l'exposition sonore de l'individu qui le porte. Outre la contrainte qu'impose un tel ré-étalonnage, le dispositif individuel peut aisément être faussé, induisant une évaluation erronée de l'exposition sonore individuelle.

Il est connu de EP-A-1 693 655 de mesurer des vibrations dans une cabine d'engin de chantier, en mettant en oeuvre un procédé initié et stoppé par l'utilisateur. Ce procédé n'est pas fiable car il dépend du bon vouloir et de la maîtrise technique de l'utilisateur.

Ces inconvénients empêchent la généralisation de l'usage de ces dispositifs individuels pour protéger l'ensemble des personnes se rendant dans une discothèque, une salle de concert, une usine ou tout autre lieu bruyant.

La présente invention vise notamment à remédier à ces inconvénients en proposant un dispositif et un procédé pour évaluer l'exposition sonore d'un individu réalisant des mesures précises et fiables, tenant compte de la durée d'exposition individuelle et n'imposant pas le port d'un objet encombrant et onéreux à cet individu. Par « évaluer », on entend déterminer ou quantifier une valeur.

A cet effet, l'invention concerne un dispositif pour évaluer l'exposition sonore d'un individu séjournant dans au moins un lieu exposé au bruit émis par au moins une source, l'individu portant, un objet contenant un numéro d'identification propre associé à cet individu ; caractérisé en ce qu'il comprend :
- au moins un moyen de détermination des instants d'entrée et de sortie de l'individu respectivement dans et hors du lieu, le ou chaque moyen de détermination comprenant au moins un organe de reconnaissance susceptible d'interagir avec l'objet porté par l'individu pour déterminer les instants d'entrée et de sortie de l'individu respectivement dans et hors du lieu ;
- au moins un capteur installé dans le lieu et apte à réaliser des mesures de bruit en au moins un point du lieu ; et
- un calculateur apte, d'une part, à communiquer avec le ou chaque moyen de détermination et à définir la durée de séjour de l'individu dans le lieu entre les instants d'entrée et de sortie et, d'autre part, à communiquer avec le ou chaque capteur et à définir des valeurs représentatives de l'exposition sonore de l'individu durant le séjour, le calculateur étant apte à émettre des signaux représentatifs de cette exposition sonore.

En d'autres termes, aucun capteur ou dosimètre n'est à porter par un individu, car le capteur demeure dans le lieu bruyant d'où il transmet ses mesures au calculateur, lui-même pouvant être fixe dans ce lieu, ceci afin d'évaluer l'exposition sonore sur la base de la durée du séjour de l'individu dans le lieu bruyant.

Selon d'autres caractéristiques avantageuses de l'invention :
- le dispositif comprend en outre une interface apte à recevoir les signaux et à informer l'individu sur son exposition sonore ;
- l'organe de reconnaissance est un organe de reconnaissance d'un objet porté par l'individu ;
- le ou chaque moyen de détermination comprend un appareil apte à détecter par radio-identification une radio-étiquette portée par l'individu ;
- le calculateur est apte à communiquer avec des moyens de localisation en temps réel de l'individu dans le lieu et à pondérer les mesures de bruit en fonction de la position de l'individu par rapport à la ou les sources sonores ;
- les moyens de localisation se composent de plusieurs appareils répartis dans le lieu et délimitant des espaces élémentaires, les appareils étant aptes à détecter les déplacements de l'individu entre les espaces élémentaires ;
- le dispositif comprend plusieurs capteurs répartis dans le lieu à raison d'au moins un par espace élémentaire, le calculateur intégrant les mesures réalisées par les capteurs installés dans les espaces élémentaires traversés consécutivement par l'individu ;
- le dispositif comprend des moyens de signalisation au calculateur de l'utilisation par l'individu d'un moyen de protection sonore individuel, notamment de type casque ou bouchons auriculaires ;
- le dispositif comprend en outre un calculateur central apte à communiquer avec les calculateurs équipant plusieurs lieux et à réaliser la sommation des expositions sonores de l'individu lors de séjours consécutifs ou non dans les différents lieux, le calculateur central étant susceptible d'appliquer des corrections selon les durées de récupération physiologique séparant les séjours et/ou selon les antécédents médicaux de l'individu ;
- le dispositif comprend des moyens de communication, au calculateur ou au calculateur central, de l'exposition sonore reçue par l'individu lorsqu'il est exposé au son émis par un moyen d'écoute individuel, notamment un baladeur équipé d'un casque ou d'une oreillette d'écoute ;
- le dispositif comprend des moyens de communication, au calculateur ou au calculateur central, de l'exposition sonore mesurée par un dosimètre individuel porté par l'individu.

L'invention concerne également un procédé qui peut être mis en oeuvre avec un dispositif tel que décrit ci-dessus pour l'évaluation de l'exposition sonore d'un individu séjournant dans au moins un lieu exposé au bruit émis par au moins une source et qui porte un objet contenant un numéro d'identification propre associé à cet individu. Ce procédé comprend des étapes consistant à :
a) - réaliser des mesures de bruit en au moins un point du lieu au moyen d'au moins un capteur ;
b) - déterminer, par un moyen de détermination comprenant au moins un organe de reconnaissance interagissant avec un objet porté par l'individu, l'instant d'entrée de l'individu dans le lieu ;
c) - communiquer l'instant d'entrée à un calculateur ;
d) - communiquer les mesures de bruit au calculateur ;
e) - intégrer les mesures de bruit sur la durée de séjour de l'individu dans le lieu entre les instants d'entrée et de sortie au moyen du ou des capteurs ou du calculateur ;
f) - déterminer, par un moyen de détermination comprenant au moins un organe de reconnaissance interagissant avec un objet porté par l'individu, l'instant de sortie de l'individu hors du lieu;
g) - émettre des signaux représentatifs de l'exposition sonore de l'individu durant le séjour.

Selon les variantes du procédé, l'étape (f) précède l'étape (g) ou bien l'étape (g) précède l'étape (f).

Ce procédé peut comprendre en outre les étapes consistant à :
m) - calculer la durée de récupération physiologique nécessaire pour abaisser la dose de bruit reçue par l'individu lors de son exposition sonore jusqu'au niveau d'une valeur prédéterminée ;
n) - émettre des signaux représentatifs de ladite durée de récupération physiologique.

De façon avantageuse, ce procédé peut comprendre en outre une étape (h) consistant à transmettre les signaux émis lors de l'étape g) et/ou lors de l'étape n) à une interface sur requête de l'individu et/ou à tout instant prédéfini dans le calculateur et/ou lorsque son exposition sonore dépasse ou atteint une valeur prédéterminée, notamment en fonction d'un seuil normatif.

L'ordre des étapes e), f), g), m), n) et h) peut être modifié dans le cadre de la présente invention.

Ce procédé peut également comprendre des étapes préalables consistant à :
i) - réaliser des mesures de bruit en plusieurs points répartis dans le lieu et distants de la source ;
j) - définir une correction des mesures de bruit reçu en chacun des points ;
ainsi que des étapes consistant à :
k) - localiser en temps réel l'individu dans ce lieu ;
l) - pondérer des valeurs représentatives des mesures de bruit du capteur en fonction des corrections de la localisation.

L'invention sera bien comprise et d'autres avantages de celle-ci apparaîtront aussi à la lumière de la description qui va suivre de plusieurs dispositifs conformes à l'invention, donnée uniquement à titre d'exemple et faite en se référant aux dessins annexés dans lesquels :
- la figure 1 est une représentation schématique d'un dispositif conforme à un premier mode de réalisation de l'invention ;
- la figure 2 est une représentation schématique d'un individu et de plusieurs variantes de composants d'un dispositif conforme à l'invention ;
- la figure 3 est une représentation schématique d'un dispositif conforme à un deuxième mode de réalisation de l'invention ;
- la figure 4 est une représentation schématique d'un lieu bruyant illustrant une étape d'un procédé conforme à l'invention ;
- la figure 5 illustre une variante du dispositif de la figure 3 qui forme un troisième mode de réalisation de l'invention ;
- la figure 6 est une représentation schématique d'un dispositif conforme à un quatrième mode de réalisation de l'invention ;
- la figure 7 est une représentation schématique d'un dispositif conforme à un cinquième mode de réalisation de l'invention ;
- la figure 8 est une représentation schématique d'un dispositif assemblant des dispositifs illustrés aux figures 1, 3, 5 et 6 ;
- la figure 9 présente un tableau exemplifiant un calcul d'expositions sonores ;
- la figure 10 présente un exemple de simulation d'une exposition sonore individuelle.

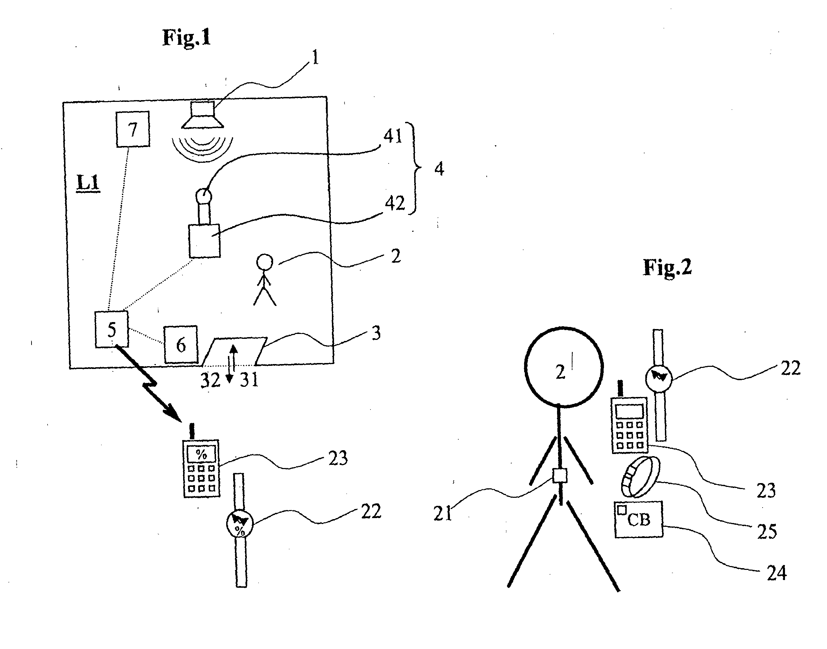

La figure 1 montre un lieu L₁ exposé au bruit émis par une source sonore 1. Par lieu, on désigne tout espace susceptible de présenter une ambiance bruyante. En l'occurrence, le lieu L₁ peut être constitué d'un local industriel ou d'une salle de concert ou de discothèque. Par source de bruit, on désigne tout appareil susceptible d'émettre des sons ou des bruits. Il peut par exemple s'agir d'un haut-parleur ou d'une machine industrielle.

Le lieu L₁ est susceptible d'accueillir un ou plusieurs individu(s), dont il est souhaitable de gérer le risque de troubles auditifs. Pour connaître précisément les instants d'entrée et de sortie d'un individu 2 respectivement dans et hors du lieu L₁, ce dernier est équipé d'un moyen de détermination approprié situé à proximité d'un accès au lieu L₁.

Le moyen de détermination comprend un organe de reconnaissance formé ici par un portique 3 de radio-identification fonctionnant selon la technologie d'identification par radio-fréquence dite « RFID » (de l'anglais *Radio frequency identification*). Pour permettre son identification par le portique 3, un individu 2 porte un objet qui lui est propre et qui est susceptible d'interagir avec l'organe de reconnaissance appartenant au moyen de détermination du lieu L₁. En l'occurrence, comme le montre la figure 2, l'individu 2 porte une radio-étiquette 21 susceptible d'être activée par le portique 3 et de lui transmettre ainsi les informations qu'elle contient. Ces informations, qui peuvent être de toute nature, sont destinées à identifier de manière univoque l'individu 2 lors de ses entrées et sorties dans et hors du lieu L₁, symbolisées respectivement par les flèches 31 et 32 à la figure 1 qui présentent respectivement les instants d'entrée dans et de sortie du lieu L₁.

L'organe de reconnaissance de l'individu peut par ailleurs être constitué d'un appareil d'identification préexistant, tel que ceux interagissant avec une montre avec émetteur/récepteur ou un téléphone portable.

Que ce soit par le portique 3 ou par un des autres matériels envisagés ci-dessus, un numéro d'identification propre est associé à chaque individu 2.

Le dispositif de la figure 1 comprend en outre un calculateur local 5 apte à communiquer avec le portique 3 de façon à relever les instants d'entrée 31 et de sortie 32 de l'individu 2 dans et hors du lieu L₁. Le calculateur 5 peut être constitué d'un ordinateur ou de tout autre organe gestionnaire de données. Il peut se trouver dans le lieu L₁, comme représenté sur la figure 1, ou en être éloigné tout en restant relié aux divers composants du dispositif objet de l'invention par l'intermédiaire de moyens de communication électroniques.

La radio-étiquette 21 peut être intégrée ou solidarisée par tout moyen de fixation à un objet personnel de l'individu 2, tel que sa montre 22, son téléphone portable 23, une carte magnétique personnelle 24 ou encore un bracelet 25 fourni, par exemple, par l'autorité régissant le lieu L₁ préalablement à l'entrée 31. En pratique, l'identification par radio-fréquence peut être opérée par le portique 3, mais aussi par une borne ou par tout lecteur électronique similaire.

Dans le lieu L₁ est installé un capteur 4 apte à mesurer le bruit en un ou plusieurs points du lieu L₁. En l'occurrence, le capteur 4 est installé sensiblement au centre du lieu L₁. En pratique, le capteur 4 est constitué par un sonomètre-intégrateur installé dans la partie du lieu L₁ où la mesure effectuée est la plus représentative des niveaux sonores perçus par les individus présents dans ce lieu. Le capteur 4 possède un module intégrateur 42 qui est apte à fournir le niveau sonore moyen équivalent, perçu par un microphone 41 appartenant au capteur 4, sur une courte durée, par exemple de l'ordre de la seconde, définissant ainsi une valeur d'exposition unitaire. Le capteur 4 est également apte à déterminer le niveau de pression de crête sur une période donnée. Le niveau sonore moyen équivalent peut ainsi être complété par le nombre de dépassements d'un niveau de pression de crête maximum admissible pour définir avec précision l'exposition sonore d'un individu 2 présent dans le lieu L₁. Le capteur 4 réalise ainsi un sonomètre-intégrateur de bruit qui peut en outre appliquer une pondération physiologique, par exemple de type A, B ou C, aux mesures qu'il réalise.

Le calculateur 5 est apte à communiquer avec le capteur 4 par l'intermédiaire de moyens non représentés, de type filaire ou radio. Le calculateur 5 reçoit donc du capteur 4 des signaux représentatifs des valeurs d'exposition unitaires et relatifs au bruit émis par la source 1. Puisqu'il est informé par le portique 3 des entrées 31 et des sorties 32 de l'individu 2, il peut additionner les valeurs d'exposition unitaires transmises par le capteur 4 sur la durée du séjour, c'est à dire intégrer le résultat des mesures de bruit sur la durée du séjour.

Le résultat de cette sommation correspond à l'exposition sonore de l'individu 2 durant son séjour dans le lieu L₁.

De manière encore plus détaillée : Le module 42 intègre le niveau de bruit perçu par le microphone 41 sur de courtes durées, par exemple de une seconde, ou une minute, selon la précision recherchée et la puissance de traitement de calculs dont on dispose. Les valeurs d'exposition unitaires intégrées sur ces courtes durées, sont transmises par le capteur 4 au calculateur 5. Elles font ensuite l'objet d'une sommation sur la durée du séjour de chaque individu 2 pour déterminer la dose de bruit qu'il a reçue au cours de son séjour. En pratique, la sommation est effectuée par le calculateur 5 à la fin de chaque courte durée, ce qui permet de déterminer, quasiment en temps réel, la dose de bruit reçue. La dose de bruit de chaque individu 2 est alors associée à son numéro d'identité électronique par le calculateur 5.

Selon une variante de l'invention, le signal de sortie du microphone 41 peut être transmis directement au calculateur 5 qui l'intègre lui-même sur une courte durée. Dans ce cas, on s'affranchit du module 42 et la définition ainsi que le traitement des valeurs représentatives de l'exposition sonore a lieu uniquement dans le calculateur 5.

Le capteur 4 et le calculateur 5 réalisent ainsi un dosimètre de bruit apte à associer au numéro d'identité électronique de chaque individu 2, une valeur représentative de son exposition sonore durant son séjour dans un lieu bruyant dans lequel il a été identifié par les moyens de détermination 3.

De plus, le calculateur 5 est apte à émettre des signaux représentatifs de l'exposition sonore de l'individu 2 durant son séjour entre les instants 31 et 32 dans le lieu L₁.

Le dispositif de la figure 1 comprend en outre une interface 6 apte à recevoir un tel signal émis par le calculateur 5, puis à informer l'individu 2 sur son exposition sonore. L'interface 6 peut être constituée d'un distributeur situé près de la sortie du lieu L₁ et au-delà du portique 3 et fournissant à l'individu 2 un ticket mentionnant son exposition sonore.

Alternativement, l'interface peut être constituée d'un écran d'affichage numérique et éventuellement complétée par un afficheur 7 situé dans le lieu L₁ pour indiquer en temps réel à l'individu 2 son exposition sonore. Alternativement encore, l'interface peut être constituée par la montre avec émetteur/récepteur 22 ou par le téléphone portable 23 de l'individu 2 auquel le calculateur 5 envoie un message alphanumérique ou figuratif représentatif de son exposition sonore. De même, la montre 22 ou le téléphone portable 23 peut incorporer un organe remplissant tout ou partie des fonctions du calculateur 5.

Le calculateur 5 peut en outre tenir compte de l'utilisation par l'individu d'un moyen de protection sonore individuel de type casque ou bouchons auriculaires. Lorsque le moyen de protection ou son boîtier de rangement est équipé d'un interrupteur émettant un signal à destination du calculateur 5, ce dernier connaît précisément l'instant à partir duquel l'individu porte le moyen de protection sonore. Cet interrupteur-émetteur constitue alors un moyen de signalisation au calculateur 5 de l'utilisation par l'individu du moyen de protection. Le calculateur 5 pondère alors les mesures de bruit de façon à tenir compte de cette protection et à fournir une évaluation précise de l'exposition sonore de chaque individu identifié.

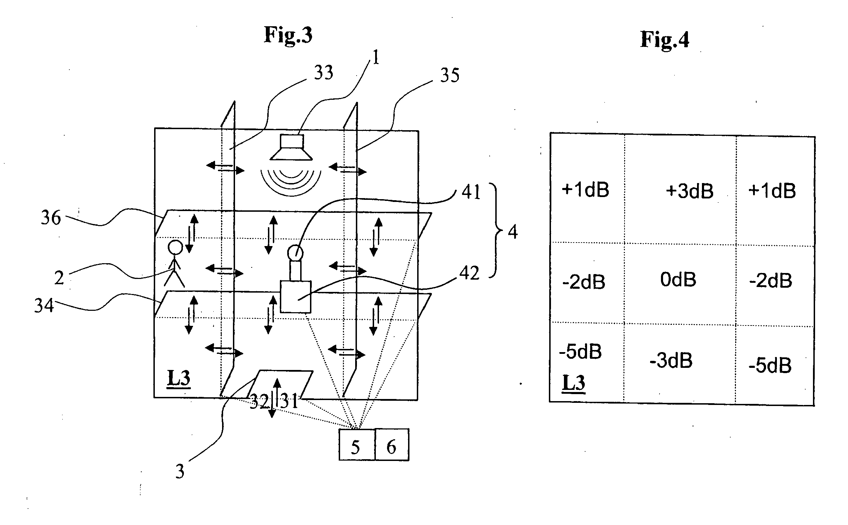

Les figures 3 et 4 présentent une variante du dispositif de la figure 1, dans laquelle le calculateur 5 est apte à communiquer avec des moyens de localisation en temps réel de l'individu 2 dans un lieu L₃. Les moyens de localisation sont ici constitués de portiques 33 à 36 de radio-identification analogues au portique 3 détectant les entrée 31 et sortie 32 de l'individu 2 dans le lieu L₃.

Les portiques 33 à 36 sont répartis dans le lieu L₃ de façon à le quadriller en espaces élémentaires symbolisés par des traits pointillés sur les figures 3 et 4. Les portiques 33 à 36 peuvent ainsi détecter par radio-identification les déplacements de l'individu 2 entre les espaces élémentaires. Ces déplacements sont symbolisés sur la figure 2 par des flèches analogues aux flèches 31 et 32. Le calculateur 5 dispose donc d'une indication en temps réel du positionnement de l'individu 2 dans le lieu bruyant.

Selon un procédé conforme à l'invention, on réalise, préalablement à l'entrée de l'individu 2 dans le lieu L₃, un étalonnage acoustique du lieu L₃, à partir de mesures de bruit faites en plusieurs points distants de la source 1 et répartis dans le lieu L₃ de façon à représenter chaque espace élémentaire. Ces mesures permettent de définir une correction sur le bruit reçu pour chacun des espaces élémentaires.

On établit ainsi une cartographie des corrections à appliquer aux mesures de bruit selon l'espace élémentaire dans lequel se trouve l'individu 2. La figure 4 présente une telle cartographie en indiquant les corrections en décibels par référence à l'espace élémentaire central du lieu L₃ où se trouve le microphone 41. Ainsi, la correction est ici de +3dB pour l'espace élémentaire dans lequel se trouve la source 1, tandis qu'elle est de -5dB pour les espaces élémentaires les plus éloignés de la source 1.

Compte tenu de cette cartographie des comections à appliquer et de la localisation en temps réel de l'individu 2 par les portiques 33 à 36, le calculateur 5 est apte à pondérer les mesures de bruit en fonction de la position de l'individu 2 dans le lieu bruyant ou, plus précisément, en fonction de l'espace élémentaire dans lequel il se trouve. Le dispositif de la figure 3 fournit donc une évaluation de l'exposition sonore de l'individu 2 plus précise que celle du dispositif de la figure 1, dans la mesure où il est capable de suivre les déplacements de l'individu 2, et prendre en compte les différences de niveaux sonores pouvant exister dans le lieu.

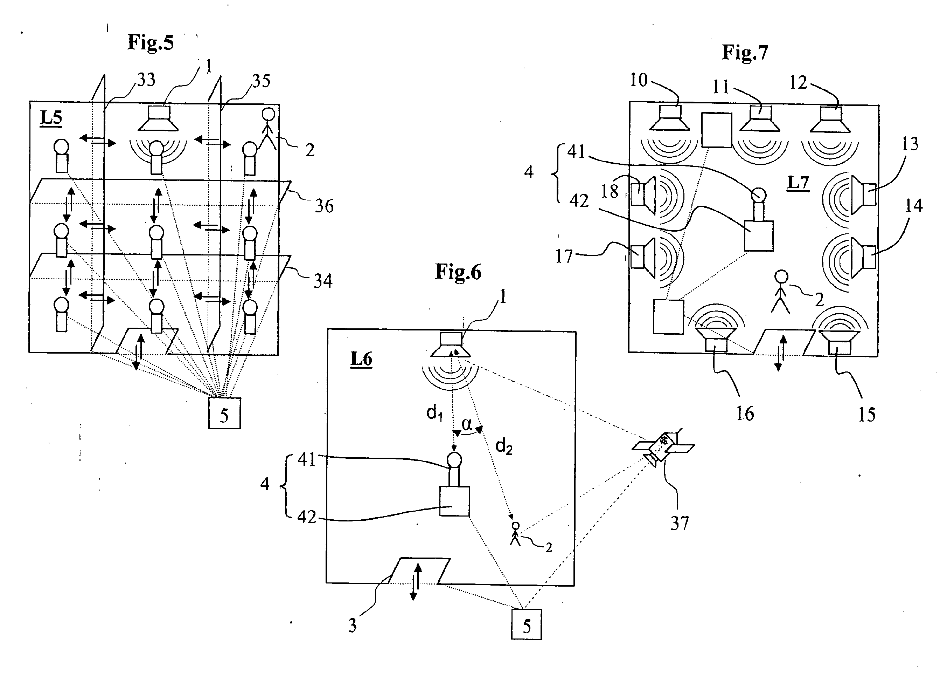

La figure 5 illustre une variante du dispositif de la figure 3, dans laquelle chaque espace élémentaire d'un lieu L₅ comprend au moins un microphone de type 41. Le calculateur 5 dispose ainsi en temps réel des mesures de bruit effectuées dans chaque espace élémentaire. Il n'est donc pas nécessaire de réaliser une cartographie préalable des corrections à appliquer aux mesures de bruit. De plus, le calculateur 5 est informé des déplacements de l'individu 2 entre espaces élémentaires par l'intermédiaire des portiques 33 à 36 de radio-identification.

Le calculateur 5 est donc apte à intégrer la mesure réalisée par le microphone 41 correspondant à l'espace élémentaire dans lequel se trouve effectivement l'individu 2. Le dispositif de la figure 5 fournit ainsi une évaluation précise de l'exposition sonore de l'individu 2.

La figure 6 présente un autre mode de réalisation du dispositif objet de l'invention, dans lequel les moyens de localisation en temps réel de l'individu 2 dans un lieu L₆ mettent en oeuvre un système de positionnement global comprenant au moins un satellite 37, ou tout dispositif de localisation géographique. L'individu 2, la source sonore 1 et le microphone 41 du capteur 4 sont équipés chacun d'un émetteur permettant au satellite 37 de les localiser précisément les uns par rapport aux autres.

Le satellite 37 communique au calculateur 5 les positions respectives de l'individu 2, du microphone 41 et de la source 1, laquelle peut être prévue mobile. Le calculateur 5 peut ainsi déterminer la distance d₁ séparant la source 1 du microphone 41 et la distance d₂ séparant la source 1 de l'individu 2. A partir de ces données, le calculateur 5 peut pondérer les mesures réalisées par le capteur 4 en fonction de la variation de la distance d₂. Avantageusement, le calculateur 5 peut déterminer et prendre en compte l'angle α entre l'axe de diffusion sonore de la source 1 et l'axe de positionnement de l'individu 2 par rapport à la source 1. Avantageusement encore, un étalonnage acoustique d'un quadrillage d'espaces élémentaires peut être effectué, comme expliqué ci-dessus en référence aux figures 3 et 4, cet étalonnage permettant au calculateur 5 de pondérer les mesures réalisées par le capteur 4 en fonction des valeurs de positionnement de l'individu 2 fournies par le satellite 37 et relatives à ce quadrillage d'espaces élémentaires.

Le dispositif illustré par la figure 6 fournit ainsi une évaluation précise de l'exposition sonore de l'individu 2. Un tel dispositif trouve une application avantageuse dans le cas d'un lieu L₆ de superficie étendue. C'est par exemple le cas des concerts de plein air, tels que ceux produits dans un festival.

La localisation d'un individu dans un lieu bruyant n'est toutefois pas nécessaire lorsque le niveau sonore qui y règne est sensiblement uniforme. Ainsi, dans l'exemple de la figure 7, un lieu L₇ est équipé de plusieurs sources sonores 10 à 18 réparties à sa périphérie. De plus, le lieu L₇ peut subir un traitement acoustique comme l'installation de matériaux spéciaux, absorbants ou réfléchissants, sur ses parois pour uniformiser le niveau sonore qui y règne. Le capteur 4 fournit donc des mesures de bruit représentatives du niveau sonore auquel est exposé un individu 2 et ce, quelle que soit la position de ce dernier dans le lieu L₇.

Une situation analogue à celle mentionnée en référence à la figure 7 se produit également dans le cas d'une source sonore présentant un front d'onde homogène, de type cylindrique.

Les dispositifs illustrés par les figures 1 et 3 à 7 permettent d'évaluer l'exposition sonore d'un individu séjournant dans un lieu bruyant déterminé. Cependant, l'individu peut, au cours d'une période de temps donnée, fréquenter plusieurs lieux bruyants avec des phases de repos entre chaque séjour.

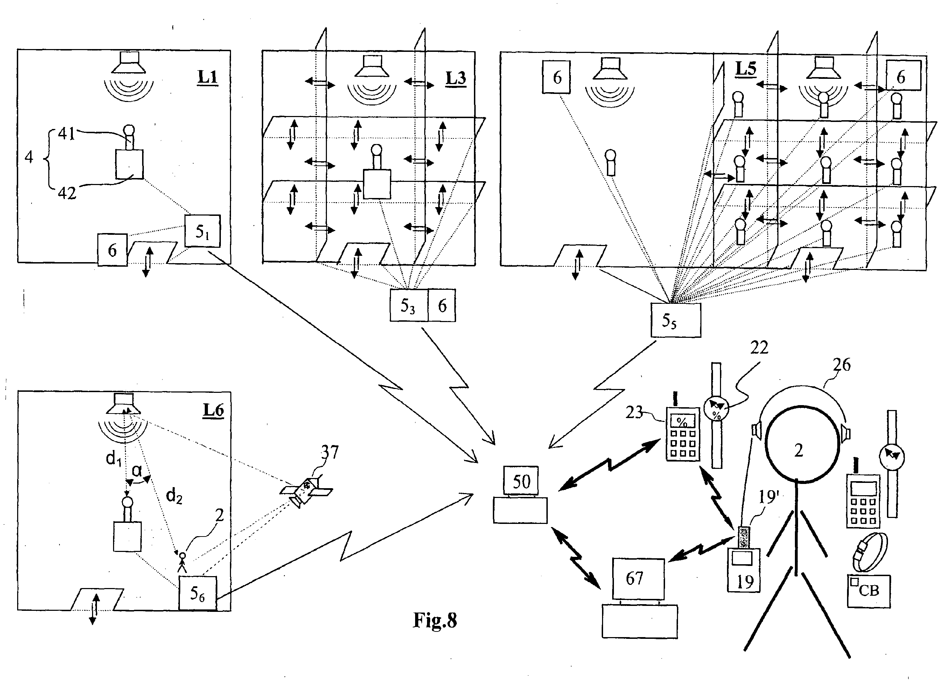

La figure 8 illustre un dispositif conforme à la présente invention qui permet d'additionner les expositions sonores d'un individu 2 ayant séjourné consécutivement ou non dans les lieux L₁, L₃, L₅ et L₆ équipés des dispositifs décrits en relation avec les figures afférentes. Comme représenté sur la figure 8, le lieu L₅ peut en outre être attenant à un lieu semblable au lieu L₁. D'autres combinaisons de lieux sont bien entendu envisageables. De plus, les lieux représentés sur la figure 8 ne sont pas nécessairement des discothèques ou des salles de concert, mais peuvent consister en tout lieu de travail, lieu d'activités sportives, véhicule, ou tout lieu bruyant équipé de moyens du type de ceux décrits ci-dessus.

Le dispositif de la figure 8 comprend en outre un calculateur central 50 apte à communiquer avec les calculateurs locaux 5₁, 5₃, 5₅ et 5₆ équipant respectivement les lieux L₁, L₃, L₅ et L₆. Le calculateur central 50 est apte à réaliser la sommation des expositions sonores de l'individu 2 lors de ses séjours consécutifs ou non dans les différents lieux bruyants. Le calculateur 50 peut en outre prendre en compte l'exposition sonore reçue par l'individu 2 lorsqu'il est exposé au son émis par un moyen d'écoute individuel 19, tel qu'un baladeur comprenant un casque ou oreillette d'écoute 26, dans la mesure où ce moyen d'écoute individuel est apte à communiquer le numéro d'identification électronique de l'individu 2, la durée, le niveau sonore d'écoute et/ou les valeurs d'exposition sonore au calculateur central 50, éventuellement via le calculateur local 5, au moyen d'un émetteur 19' approprié et/ou via des interfaces personnelles, telles que sa montre avec émetteur/récepteur 22 ou son téléphone portable 23 ou un ordinateur personnel 67. De même, le calculateur 50 peut prendre en compte l'exposition sonore mesurée par un dosimètre individuel (non représenté) porté par l'individu 2, dans la mesure où ce dosimètre individuel est apte à communiquer le numéro d'identification électronique de l'individu 2, la durée de la mesure et les valeurs d'exposition sonore mesurées au calculateur central 50, éventuellement via le calculateur local 5, au moyen d'un dispositif de transmission d'information approprié (non représenté).

Le dispositif de la figure 8 permet donc d'évaluer l'exposition sonore globale de l'individu 2. De plus, le calculateur central 50 peut appliquer à cette exposition globale des corrections liées aux durées de récupération physiologique séparant les séjours en lieux bruyants, ainsi qu'aux antécédents médicaux de l'individu 2. Pour tenir compte des phases de récupération physiologique entre deux séjours de l'individu en lieu bruyant, l'exposition sonore globale peut aussi, selon une variante, être exprimée sur une période glissante, c'est-à-dire en fait calculée en temps réel, pour une durée donnée jusqu'à l'instant où sa valeur est transmise à l'interface d'information de l'utilisateur.

Le calculateur central 50 peut être constitué d'un ordinateur relié par un réseau de type Intranet ou Internet aux calculateurs locaux 5₁, 5₃, 5₅ et 5₆. Le calculateur central 50 peut en outre communiquer des signaux représentatifs de l'exposition sonore globale de l'individu 2 à une interface constituée par l'ordinateur personnel 67, par la montre avec émetteur/récepteur 22 ou par le téléphone portable 23 de cet individu. Pour les interfaces personnelles 67, 22 ou 23 comme pour les interfaces locales 6, le calculateur central 50 ou les calculateurs locaux peu(ven)t transmettre les signaux indiquant l'exposition sonore lorsque l'individu quitte un lieu bruyant, lorsqu'il en fait la requête ou lorsque son exposition sonore globale dépasse ou atteint une valeur déterminée par l'individu lui-même ou par un seuil normatif. Outre un ordinateur personnel, une montre avec émetteur/récepteur ou un téléphone portable, l'interface peut être constituée de divers appareils tels qu'un écran, un afficheur, un vibreur, un générateur de flash, une alarme, un compteur, un distributeur de tickets ou de messages électroniques etc.

En variante, l'interface personnelle de l'individu 2, telle que sa montre avec émetteur/récepteur 22 ou son téléphone portable 23, peut former un calculateur central « individuel » 50, qui est alors apte à recevoir et à gérer directement les informations sur l'exposition sonore transmises par les calculateurs locaux 5₁, 5₃, 5₅ et 5₆ et/ou par le moyen d'écoute individuel 19.

L'exposition sonore d'un individu peut également être communiquée, en tant que de besoin, à une autorité responsable ou soucieuse de sa santé, telle que son employeur ou un organisme de santé publique.

L'exposition sonore transmise à l'individu peut être accompagnée d'une information de type éducative, normative voire coercitive lorsqu'il faut ordonner à l'individu de quitter un local particulièrement bruyant. L'exposition sonore peut aussi être transmise à un appareil apte à limiter l'accès de l'individu au lieu bruyant, tel qu'un portillon automatisé ou tout dispositif permettant de l'informer de la nécessité de porter des protections auditives, voire de lui en distribuer. L'information normative peut consister à rapporter l'exposition sonore à une dose acceptable exprimée par une norme telle que, par exemple, les normes européenne ISO ou américaine OSHA. Cette dose de bruit maximale admissible peut être indiquée pour une période paramétrable p qui peut être, par exemple, de 8 h, d'une journée, d'une semaine, d'une année, voire d'une carrière professionnelle de 40 ans.

Dans la suite de cette description, la variable « p » ajoutée à la valeur d'une grandeur correspond à la durée de la période pour laquelle est considérée cette grandeur. Par exemple, la valeur « %dose,p » correspond à un pourcentage de dose, la valeur de 100% étant égale à la dose maximale pouvant être reçue, d'après la norme de référence, sur la période p considérée.

Un procédé permettant d'évaluer l'exposition sonore d'un individu 2 en rapport à une dose acceptable sur une période notée p est le suivant :
Chaque individu possède un "compte d'exposition" géré par le calculateur central 50, qu'il peut interroger à tout moment, ou dont la valeur peut lui être transmise régulièrement, lors d'une atteinte ou d'un dépassement d'un seuil paramétrable, ou à l'entrée ou à la sortie d'un lieu bruyant équipé d'un dispositif selon l'invention.

Pour chaque dispositif installé et lors de chaque période unitaire t, qui peut, par exemple, être d'une seconde, ou d'une minute, ou de 10 minutes, le capteur 4 mesure le niveau sonore moyen équivalent (L_{eq},t) éventuellement pondéré physiologiquement (filtres A, B, C...) et transmet sa valeur au calculateur 5. En appliquant une éventuelle pondération "d'espace élémentaire" ou d'antécédents médicaux ou encore de "port de protecteur", le calculateur 5 de chaque lieu associe la valeur de L_{eq},t à chaque numéro d'identité électronique repéré dans le lieu, correspondant donc aux individus 2 présents. Ce calculateur transmet l'ensemble de ces informations au calculateur central 50.

Le calculateur central 50 transforme mathématiquement chaque L_{eq},t reçu en %dose,p puis l'additionne au compte d'exposition correspondant au numéro d'identification électronique propre auquel il est associé.

Dans le même temps, le calculateur central 50 déduit un %récupération,p de chaque compte d'exposition des identités électroniques n'ayant pas été additionné d'un L_{eq},t, c'est à dire de chaque compte correspondant à un individu 2 ne se situant dans aucun des lieux bruyants équipés d'un dispositif selon l'invention, dans la limite éventuelle de zéro%dose,p.

Les nouvelles valeurs des comptes d'exposition de chaque individu 2 peuvent alors faire l'objet, de la part du calculateur, de toute transmission à but informatif, éducatif ou coercitif.

L'émission des signaux représentatifs de l'exposition sonore d'un individu durant son séjour précède la détermination de l'instant où il quitte le lieu bruyant. Toutefois, en variante, on peut déterminer d'abord l'instant où l'individu quitte ce lieu, puis émettre ces signaux.

Ainsi, en ce qui concerne chaque compte d'exposition correspondant aux numéros d'identification alloués comme mentionné ci-dessus, un cycle constitué des étapes suivantes s'installe :
- Entrée de l'individu 2 dans un lieu équipé selon l'invention : le calculateur central 50 commence à additionner les %dose,p obtenues à partir des L_{eq},t fournis par le calculateur 5 de ce lieu ;
- Sortie de l'individu 2 du lieu équipé selon l'invention : le calculateur central 50 arrête d'additionner les %dose,p obtenues à partir des L_{eq},t fournis par le calculateur 5 de ce lieu et commence à déduire un %récupération,p ;
- Nouvelle entrée de l'individu 2 dans un lieu équipé selon l'invention, qui peut être le même lieu que le précédent ou un nouveau : le calculateur central 50 arrête de déduire les %récupération,p et recommence à additionner les %dose,p obtenues à partir des L_{eq},t fournis par le calculateur 5 de ce lieu ;
- Le cycle peut se poursuivre indéfiniment dans cette alternance.

Une variante à ce procédé peut consister à ne pas déduire les %récupération,p et à effectuer la sommation des %dose,p sur une période glissante, c'est-à-dire en fait calculée en temps réel, pour une durée donnée jusqu'à l'instant où sa valeur est transmise à l'interface d'information de l'utilisateur. Une remise à zéro du compte d'exposition peut éventuellement être effectuée par l'utilisateur auprès du calculateur central 50 et via des interfaces personnelles 22, 23 ou un ordinateur personnel 67.

De plus, lorsque l'individu utilise un moyen d'écoute individuel 19 équipé d'un émetteur 19', une valeur de niveau sonore moyen équivalent L_{eq}, mesurée par un dispositif de mesure d'exposition sonore du casque 26, la durée s d'exposition sonore correspondante et un numéro d'identification électronique , sont transmis, en temps réel ou *a posteriori,* au calculateur central 50, éventuellement via le calculateur local 5. Le calculateur central 50 transforme alors mathématiquement la valeur de l'exposition L_{eq},s reçue en %dose,p puis l'additionne au compte d'exposition du numéro d'identification électronique auquel il est associé. Le cas échéant, le calculateur central 50 déduit du compte d'exposition en question une valeur de %récupération,p correspondant à la valeur de la durée s transmise.

Enfin, lorsque l'individu 2 porte un dosimètre individuel équipé d'un dispositif de transmission d'information approprié (non représentés), une valeur de niveau sonore moyen équivalent L_{eq}, la durée s d'exposition sonore correspondante et un numéro d'identification électronique sont transmis en temps réel ou *a posteriori* au calculateur central 50, éventuellement via le calculateur local 5. Le calculateur central 50 transforme alors mathématiquement la valeur de l'exposition L_{eq},s reçue en %dose,p puis l'additionne au compte d'exposition du numéro d'identification électronique auquel il est associé. Le cas échéant, le calculateur central 50 déduit de ce compte d'exposition une valeur de %récupération,p correspondant à la valeur de la durée s transmise.

Les pourcentages %dose,p et %récupération,p sont définis, par les normes et réglementations en vigueur en tenant compte de la durée de la période p considérée. A défaut, ces pourcentages sont extrapolés, l'un de l'autre.

Le calculateur central 50 peut transformer mathématiquement les valeurs de L_{eq} transmises en plusieurs %dose,p et %récupération,p dont les valeurs p peuvent être différentes, par exemple : un jour, une semaine, une année, une carrière professionnelle...

Par ailleurs, le procédé conforme à l'invention peut en outre informer l'individu des périodes de récupération physiologique nécessaires. Pour cela, le procédé peut comprendre des étapes supplémentaires consistant à :
- calculer la durée « Trécupération » correspondant à la durée de récupération physiologique nécessaire pour abaisser la dose de bruit « %dose,p » reçue par l'individu lors de son exposition sonore jusqu'au niveau d'une valeur prédéterminée, par exemple 0% ou 50% de la dose hebdomadaire ; pour cela, un calculateur, local 5 ou central 50, intègre un modèle de récupération physiologique connu ;
- émettre des signaux représentant le résultat de ce calcul de durée « Trécupération » de récupération physiologique ; ces résultats peuvent ensuite être affichés sur une interface telle qu'exposée ci-dessus.

L'émission de ces résultats peut être effectuée sur requête de l'individu et/ou à tout instant pré-programmé, c'est-à-dire prédéfini dans le calculateur par exemple de façon régulière, et/ou lorsque son exposition sonore dépasse ou atteint une valeur donnée, par exemple un seuil normatif.

Ainsi, l'individu connaît la dose de bruit %dose,p qu'il a accumulée lors de ses multiples séjours en lieux bruyants, mais aussi la durée de récupération qu'il va lui être nécessaire de respecter pour diminuer cette dose jusqu'à une valeur qu'il a choisie ou qui est prédéterminée, par exemple en fonction de ses prochaines expositions sonores prévisibles par le calculateur du fait de leur récurrence ou de leur éventuelle planification.

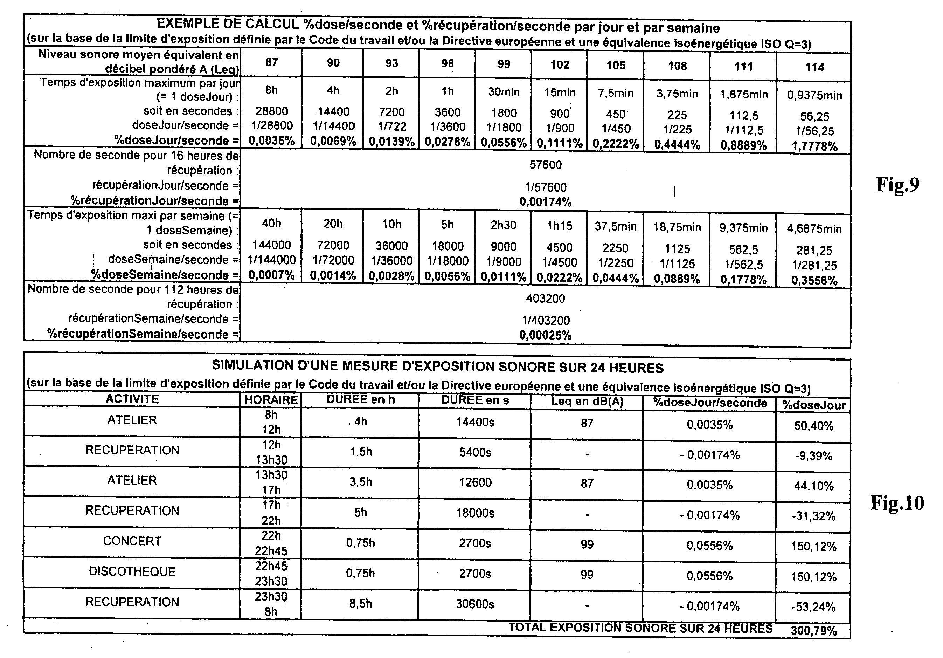

En pratique, le calcul de la durée de récupération physiologique nécessaire « Trécupération » peut par exemple être effectué comme suit :
Trécupération (en secondes) = %dose,p / %récupérationPériode/seconde,
où %récupérationPériode/seconde peut être, selon la période retenue, l'une - des variables %récupérationJour/seconde ou %récupérationSemaine/seconde illustrées par le tableau de la figure 9.

Selon une variante, le calcul de la durée de récupération physiologique nécessaire « Trécupération » peut aussi être effectué comme suit :
Trécupération (en secondes) = % dose, p. [Période p(en secondes)-(1/L_{eq})], où L_{eq} est le niveau sonore moyen équivalent (en dB éventuellement pondéré A, B, C etc.) mesuré sur la période p glissante venant de s'écouler.

En outre, afin de fournir des résultats encore plus précis et compte tenu du fait que l'ouïe d'un individu récupère d'autant plus vite que son exposition sonore est plus fractionnée, ce calcul de durée de récupération peut être basé sur un modèle intégrant le caractère fractionné de l'exposition sonore de l'individu lors de ses multiples séjours en lieu(x) bruyant(s).

La figure 9 expose un tableau présentant un calcul de doses journalières et de doses hebdomadaires pour différents niveaux sonores moyens équivalents s'étalant de 87 dB(A) à 114 dB(A). Les doses sont exprimées en pourcentage de l'exposition sonore maximale admissible, l'ensemble étant défini par les normes et réglementations en vigueur, par exemple ISO, Directive européenne et/ou Code du travail.

La figure 10 montre un tableau simulant l'exposition sonore journalière d'un individu réalisant de multiples séjours dans des lieux bruyants. L'individu se rend tout d'abord dans un atelier, entre 8 heures du matin et midi, atelier dans lequel il est exposé durant 4 heures, soit 14400 secondes, aux bruits émis par des machines. L'individu est ainsi exposé à un niveau sonore moyen équivalent L_{eq} de 87 dB(A). Ramenée à la seconde, cette exposition correspond à une dose de bruit de 0,0035% selon les normes et réglementations, ISO, Directive européenne et/ou Code du travail résumées à la figure 9. Durant ce premier séjour, l'individu reçoit donc 14400 fois 0,0035%, c'est-à-dire 50,40% de la dose journalière admissible.

Puis, cet individu quitte l'atelier pour prendre la pause déjeuner pendant 1,5 heures. Cette pause constitue donc une période de récupération, dans la mesure où elle est prise dans un lieu peu bruyant. Selon une extrapolation des normes et réglementations, ISO, Directive européenne et/ou Code du travail résumées à la figure 9, l'individu « récupère » ainsi 9.39% de la dose journalière admissible.

De 13 heures 30 à 17 heures, l'individu retourne dans l'atelier et reçoit 44,10% de la dose journalière admissible. En début de soirée, de 17 heures à 22 heures, l'individu se trouve de nouveau en situation de récupération hors d'un lieu bruyant. Il récupère alors 31,32% de la dose journalière admissible.

De 22 heures à 22 heures 45, l'individu se rend dans une salle de concert où il est exposé à un niveau sonore moyen équivalent L_{eq} de 99 dB(A), ce qui correspond à une dose de 0,0556% pour 1 seconde et, sur la période de 2700 secondes considérées, à 150,12% de la dose journalière admissible. A la suite du concert, l'individu se rend dans une discothèque attenante où il est exposé, de 22 heures 45 à 23 heures 30, à un niveau sonore moyen équivalent de 99 dB(A), ce qui correspond également à 150,12% de la dose journalière admissible. L'individu rentre ensuite à son domicile où il se repose de 23 heures 30 à 8 heures du matin, période pendant laquelle il récupère 53.24% de la dose journalière admissible.

Au total, l'exposition sonore de cet individu atteint 300.79% pour la journée de 24 heures constituée par ces différents séjours en lieux bruyants et ces périodes de récupération physiologique. Son exposition sonore correspond donc au triple de la dose journalière admissible, si bien que cet individu risque de subir des troubles auditifs. Lorsqu'on met en oeuvre le dispositif ou le procédé objets de la présente invention en équipant l'atelier, la salle de concert et la discothèque d'un capteur 4 et d'un calculateur 5 et des périphériques associés tout en allouant à l'individu un identifiant tel qu'une étiquette RFID, l'individu peut être averti de l'évolution de la dose de bruit qu'il reçoit au cours de ses différents séjours et ainsi limiter voire éliminer les risques de troubles auditifs.

Au cours de cette journée, l'individu peut ainsi être informé lorsque son exposition sonore, ou, plus précisément, la dose de bruit qu'il a reçue lors de ses épisodes d'exposition sonore, atteint ou dépasse « à la montée » une valeur donnée, par exemple 80% de la dose journalière admissible. En outre, en mettant en oeuvre un procédé conforme à l'invention, cet individu peut aussi être informé lorsque son exposition sonore atteint ou dépasse « à la descente » une autre valeur donnée, par exemple 50% de la dose journalière admissible.

Un cumul journalier peut également lui être communiqué quotidiennement, par exemple chaque jour vers 8 heures, ou chaque semaine, afin de l'aider à prendre conscience de son exposition au bruit. En outre, il peut lui être communiqué une information sur la durée de récupération physiologique qu'il devrait respecter afin d'abaisser la dose de bruit qu'il vient de recevoir. Par exemple, il pourrait être informé à son réveil, par un message sur son téléphone portable, qu'il ne devrait pas se réexposer à de forts niveaux sonores avant 172868 secondes (300,79% / 0,00174%), soit 48 heures. Cette durée correspond à la durée que mettra son cumul d'exposition pour s'abaisser à 0% de la dose journalière admissible.

Toutes ces informations permettent à l'individu de connaître et gérer ses niveaux d'exposition et de récupération en temps réel et/ou en prévision d'un nouveau séjour en lieu bruyant. De même, l'information sur la durée de récupération qu'il devrait respecter afin d'abaisser sa dose de bruit peut l'aider, ainsi que son employeur, à planifier ses activités professionnelles et ses activités de loisir au cours desquelles il est susceptible d'être exposé à de forts niveaux sonores.

Comme indiqué ci-avant, il est entendu que l'information sur ces valeurs d'exposition sonore peut être complétée par le nombre de dépassements d'une valeur du niveau de pression de crête maximum admissible comptabilisés de manière connue.

Les procédés et dispositifs objets de l'invention décrits en relation avec les figures 1 à 8 ne sont pas limités à l'évaluation de l'exposition sonore d'un seul individu, mais ils permettent au contraire de suivre simultanément plusieurs individus, dans la mesure où chacun peut être reconnu et identifié. Ainsi, ces dispositifs permettent d'évaluer les expositions sonores de tous les employés intervenant dans un local industriel bruyant ou de tous les usagers et employés d'une discothèque ou d'une salle de concert, les uns et les autres pouvant par ailleurs être constitués, en tout ou partie, des mêmes personnes. L'invention permet donc de gérer les risques de troubles auditifs liés à des expositions multiples et cumulatives d'un grand nombre d'individus sur des périodes courtes ou longues.

L'invention permet donc de dispenser les individus du port d'un appareil de type dosimètre encombrant, onéreux et fragile, tout en fournissant une évaluation précise et fiable de leur exposition sonore individuelle. De plus, l'invention réduit considérablement le coût de cette évaluation, dans la mesure où elle ne nécessite qu'un ou quelques capteur(s) pour un grand nombre d'individus.

A la mise en place du dispositif objet de l'invention, puis pour s'assurer régulièrement de son bon fonctionnement, on peut réaliser un calibrage du dispositif en évaluant les expositions sonores d'individus équipés chacun d'un dosimètre portatif et selon un protocole normalisé. La comparaison entre les expositions évaluées par le dispositif et celles évaluées par les dosimètres normalisés permet de calibrer le dispositif objet de l'invention afin qu'il transmette des données les plus fiables et précises possibles.

## Revendications

1. Dispositif pour évaluer l'exposition sonore d'un individu (2) séjournant dans au moins un lieu (L₁ ; L₃ ; L₅ ; L₆ ; L₇) exposé au bruit émis par au moins une source (1 ; 10-18) l'individu (2) portant un objet (21) contenant un numéro d'identification propre associé à cet individu (2), **caractérisé en ce qu'**il comprend :
- au moins un moyen de détermination des instants d'entrée (31) et de sortie (32) de l'individu (2) respectivement dans et hors du lieu (L₁ ; L₃ ; L₅ ; L₆ ; L₇), le ou chaque moyen de détermination comprenant au moins un organe de reconnaissance (3) susceptible d'interagir avec l'objet (21) porté par l'individu (2) pour déterminer les instants d'entrée et de sortie de l'individu respectivement dans et hors du lieu ;
- au moins un capteur (4) installé dans le lieu (L₁ ; L₃ ; L₅ ; L₆ ; L₇) et apte à réaliser des mesures de bruit en au moins un point du lieu (L₁ ; L₃ ; L₅ ; L₆ ; L₇) ; et
- un calculateur (5) apte, d'une part, à communiquer avec le ou chaque moyen de détermination et à définir la durée de séjour de l'individu (2) dans le lieu (L₁ ; L₃ ; L₅ ; L₆ ; L₇) entre les instants d'entrée (31) et de sortie (32) et, d'autre part, à communiquer avec le ou chaque capteur (4) et à définir des valeurs représentatives de l'exposition sonore de l'individu (2) durant le séjour, le calculateur (5) étant apte à émettre des signaux représentatifs de cette exposition sonore.

2. Dispositif selon la revendication 1, **caractérisé en ce qu'**il comprend en outre une interface (6, 7, 22, 23) apte à recevoir les signaux et à informer l'individu (2) sur son exposition sonore.

3. Dispositif selon l'une quelconque des revendications précédentes, **caractérisé en ce que** l'organe de reconnaissance est un organe de reconnaissance (3) de l'objet (21) porté par l'individu (2).

4. Dispositif selon la revendication 3, **caractérisé en ce que** le ou chaque moyen de détermination comprend un appareil (3) apte à détecter par radio-identification une radio-étiquette portée par l'individu.

5. Dispositif selon l'une quelconque des revendications précédentes, **caractérisé en ce que** le calculateur (5) est apte à communiquer avec des moyens de localisation (33-36 ; 37) en temps réel de l'individu (2) dans le lieu (L₃ ; L₅ ; L₆) et à pondérer les mesures de bruit en fonction de la position de l'individu (2) par rapport à la ou les sources sonores (1).

6. Dispositif selon la revendication 5, **caractérisé en ce que** les moyens de localisation se composent de plusieurs appareils (33-36) répartis dans le lieu (L₃ ; L₅) et délimitant des espaces élémentaires, les appareils (33-36) étant aptes à détecter les déplacements de l'individu (2) entre les espaces élémentaires.

7. Dispositif selon la revendication 6, **caractérisé en ce qu'**il comprend plusieurs capteurs (4) répartis dans le lieu (L₅) à raison d'au moins un par espace élémentaire, le calculateur (5) intégrant les mesures réalisées par les capteurs (4) installés dans les espaces élémentaires traversés consécutivement par l'individu (2).

8. Dispositif selon l'une quelconque des revendications précédentes, **caractérisé en ce qu'**il comprend des moyens de signalisation au calculateur (5) de l'utilisation par l'individu (2) d'un moyen de protection sonore individuel, notamment de type casque ou bouchons auriculaires.

9. Dispositif selon l'une quelconque des revendications précédentes, **caractérisé en ce qu'**il comprend en outre un calculateur central (50) apte à communiquer avec les calculateurs (5₁, 5₃, 5₅, 5₆) équipant plusieurs lieux (L₁ ; L₃ ; L₅ ; L₆) et à réaliser la sommation des expositions sonores de l'individu (2) lors de séjours consécutifs ou non dans les différents lieux (L₁ ; L₃; L₅ ; L₆), le calculateur central (50) étant susceptible d'appliquer des corrections selon les durées de récupération physiologique séparant les séjours et/ou selon les antécédents médicaux de l'individu (2).

10. Dispositif selon la revendication 9, **caractérisé en ce qu'**il comprend des moyens (22, 23; 19', 67) de communication, au calculateur (5) ou au calculateur central (50), de l'exposition sonore reçue par l'individu (2) lorsqu'il est exposé au son émis par un moyen d'écoute individuel (19), notamment un baladeur équipé d'un casque ou d'une oreillette d'écoute (26).

11. Dispositif selon la revendication 9, **caractérisé en ce qu'**il comprend des moyens de communication, au calculateur (5) ou au calculateur central (50), de l'exposition sonore mesurée par un dosimètre individuel porté par l'individu (2).

12. Procédé d'évaluation de l'exposition sonore d'un individu (2) séjournant dans au moins un lieu (L₁ ; L₃ ; L₅ ; L₆; L₇) exposé au bruit émis par au moins une source (1) et qui porte un objet (21) contenant un numéro d'identification propre associé à cet individu (2), **caractérisé en ce qu'**il comprend des étapes consistant à :
a) - réaliser des mesures de bruit en au moins un point du lieu (L₁ ; L₃ ; L₅ : L₆ ; L₇) au moyen d'au moins un capteur (4) ;
b) - déterminer, par un moyen de détermination comprenant au moins un organe de reconnaissance (3) interagissant avec l'objet (21) porté par l'individu (2), l'instant d'entrée (31) de l'individu (2) dans le lieu (L₁ ; L₃ ; L₅ ; L₆ ; L₇);
c) - communiquer l'instant d'entrée (31) à un calculateur (5) ;
d) - communiquer les mesures de bruit au calculateur (5) ;
e) - intégrer les mesures de bruit sur la durée de séjour de l'individu (2) dans le lieu (L₁ ; L₃ ; L₅ ; L₆ ; L₇) entre les instants d'entrée (31) et de sortie (32) au moyen du ou des capteurs (4) ou du calculateur (5) ;
f) - déterminer, par un moyen de détermination comprenant au moins un organe de reconnaissance (3) interagissant avec l'objet (21) porté par l'individu (2), l'instant de sortie (32) de l'individu (2) hors du lieu (L₁ ; L₃ ; L₅ ; L₆ ; L₇);
g) - émettre des signaux représentatifs de l'exposition sonore de l'individu (2) durant le séjour.

13. Procédé selon la revendication 12, **caractérisé en ce que** l'étape (g) précède l'étape (f).

14. Procédé selon la revendication 12, **caractérisé en ce que** l'étape (f) précède l'étape (g).

15. Procédé selon l'une des revendications 12 à 14, **caractérisé en ce qu'**il comprend en outre les étapes consistant à :
m) - calculer la durée de récupération physiologique nécessaire pour abaisser la dose de bruit reçue par l'individu lors de son exposition sonore jusqu'au niveau d'une valeur prédéterminée ;
n) - émettre des signaux représentatifs de ladite durée de récupération physiologique.

16. Procédé selon l'une des revendications 12 à 15, **caractérisé en ce qu'**il comprend en outre une étape (h) consistant à transmettre les signaux émis lors de l'étape g) et/ou lors de l'étape n) à une interface (6, 7, 22, 23) sur requête de l'individu (2) et/ou à tout instant prédéfini dans le calculateur (5) et/ou lorsque son exposition sonore dépasse ou atteint une valeur prédéterminée, notamment en fonction d'un seuil normatif.

17. Procédé selon l'une des revendications 12 à 16, **caractérisé en ce qu'**il comprend en outre des étapes préalables consistant à :
i) - réaliser des mesures de bruit en plusieurs points répartis dans le lieu (L₃ ; L₅ ; L₆) et distants de la source (1) ;
j) - définir une correction des mesures de bruit reçu en chacun des points ;
ainsi que des étapes consistant à :
k) - localiser (33-36 ; 37) en temps réel l'individu (2) dans ce lieu (L₃ ; L₅ ; L₆);
l) - pondérer les valeurs représentatives des mesures de bruit du capteur (4) en fonction des corrections de la localisation (33-36 ; 37).

## Patentansprüche

1. Vorrichtung zum Messen der Schallexposition eines Individuums (2), das sich an mindestens einem Ort (L₁; L₃; L₅; L₆; L₇) aufhält, der dem von mindestens einer Quelle (1; 10-18) emittierten Lärm ausgesetzt ist, wobei das Individuum (2) ein Objekt (21) trägt, das eine genau diesem Individuum (2) zugeordnete Identifikationsnummer enthält, **dadurch gekennzeichnet, dass** sie umfasst:
- mindestens ein Mittel zur Bestimmung des Zeitpunkts des Eintritts (31) und des Austritts (32) des Individuums (2) jeweils in den und aus dem Ort (L₁; L₃; L₅; L₆; L₇), wobei das oder jedes Bestimmungsmittel mindestens ein Erkennungselement (3) umfasst, das geeignet ist, mit dem von dem Individuum (2) getragenen Objekt (21) zu interagieren, um den Eintrittszeitpunkt und Austrittszeitpunkt des Individuums jeweils in den und aus dem Ort zu bestimmen;
- mindestens einen Messaufnehmer (4), der in dem Ort (L₁; L₃; L₅; L₆; L₇) installiert ist und geeignet ist, Lärmmessungen an mindestens einem Punkt des Ortes (L₁; L₃; L₅; L₆; L₇) zu realisieren; und
- einen Rechner (5), der geeignet ist, einerseits mit dem oder jedem Bestimmungsmittel zu kommunizieren und die Aufenthaltsdauer des Individuums (2) an dem Ort (L₁; L₃; L₅; L₆; L₇) zwischen dem Eintrittszeitpunkt (31) und dem Austrittszeitpunkt (32) zu definieren und andererseits mit dem oder jedem Messaufnehmer (4) zu kommunizieren und Werte zu definieren, die für die Schallexposition des Individuums (2) während des Aufenthalts repräsentativ sind, wobei der Rechner (5) in der Lage ist, für diese Schallexposition repräsentative Signale auszugeben.

2. Vorrichtung nach Anspruch 1, **dadurch gekennzeichnet, dass** sie außerdem eine Schnittstelle (6, 7, 22, 23) umfasst, die geeignet ist, Signale zu empfangen und das Individuum (2) über seine Schallexposition zu informieren.

3. Vorrichtung nach einem beliebigen der vorhergehenden Ansprüche, **dadurch gekennzeichnet, dass** das Erkennungselement ein Element (3) zur Erkennung des von dem Individuum (2) getragenen Objekts (21) ist.

4. Vorrichtung nach Anspruch 3, **dadurch gekennzeichnet, dass** das oder jedes Bestimmungsmittel ein Gerät (3) umfasst, das geeignet ist, durch Identifizierung per Funk einen von dem Individuum getragenen RFID-Chip zu detektieren.

5. Vorrichtung nach einem beliebigen der vorhergehenden Ansprüche, **dadurch gekennzeichnet, dass** der Rechner (5) geeignet ist, mit Mitteln (33-36; 37) zur Echtzeitlokalisierung des Individuums (2) an dem Ort (L₃; L₅; L₆) zu kommunizieren und die Messungen des Lärms abhängig von der Position des Individuums (2) in Bezug auf die Schallquelle(n) (1) zu gewichten.

6. Vorrichtung nach Anspruch 5, **dadurch gekennzeichnet, dass** die Lokalisierungsmittel sich aus mehreren Geräten (33-36) zusammensetzen, die an dem Ort (L₃; L₅) verteilt sind und die Elementarräume begrenzen, wobei die Geräte (33-36) geeignet sind, die Bewegungen des Individuums (2) zwischen den Elementarräumen zu detektieren.

7. Vorrichtung nach Anspruch 6, **dadurch gekennzeichnet, dass** sie mehrere an dem Ort (L₅), zumindest einen pro Raumelement, verteilte Messaufnehmer (4) umfasst, wobei der Rechner (5) die Messungen integriert, die von den Messaufnehmern (4) realisiert werden, die in den von dem Individuum (2) aufeinanderfolgend durchquerten Elementarräumen installiert sind.

8. Vorrichtung nach einem beliebigen der vorhergehenden Ansprüche, **dadurch gekennzeichnet, dass** sie Mittel zum Benachrichtigen des Rechners (5) über die Verwendung eines individuellen Schallschutzmittels durch das Individuum (2), insbesondere von der Art eines Helms oder von Ohrstöpseln, umfasst.

9. Vorrichtung nach einem beliebigen der vorhergehenden Ansprüche, **dadurch gekennzeichnet, dass** sie außerdem einen Zentralrechner (50) umfasst, der geeignet ist, mit den Rechnern (5₁, 5₃, 5₅, 5₆) zu kommunizieren, die mehrere Orte (L₁; L₃; L₅; L₆) ausrüsten, und die Summierung der Schallexpositionen des Individuums (2) während aufeinanderfolgender Aufenthalte oder nicht an den unterschiedlichen Orten (L₁; L₃; L₅; L₆) zu realisieren, wobei der Zentralrechner (50) geeignet ist, Korrekturen gemäß den Zeiträumen der physiologischen Erholung, die die Aufenthalte trennen, und/oder gemäß der Krankengeschichte des Individuums (2) durchzuführen.

10. Vorrichtung nach Anspruch 9, **dadurch gekennzeichnet, dass** sie Mittel (22, 23; 19', 67) zur Kommunikation an den Rechner (5) oder den Zentralrechner (50) über die von dem Individuum (2) empfangenen Schallexposition, wenn es einem von einem individuellen Hörmittel (19) ausgesandten Schall ausgesetzt ist, insbesondere einem mobilen Audiogerät, das mit einem Kopfhörer oder einem Headset (26) ausgerüstet ist, umfasst.

11. Vorrichtung nach Anspruch 9, **dadurch gekennzeichnet, dass** sie Mittel zur Kommunikation an den Rechner (5) oder an den Zentralrechner (50) über die Schallexposition umfasst, die von einem individuellen, von dem Individuum (2) getragenen Dosimeter gemessen wird.

12. Verfahren zur Messung der Schallexposition eines Individuums (2), das sich an mindestens einem Ort (L₁; L₃; L₅; L₆; L₇) aufhält, der dem von mindestens einer Quelle (1; 10-18) ausgesandten Lärm ausgesetzt ist, wobei das Individuum (2) ein Objekt (21) trägt, das eine genau diesem Individuum (2) zugeordnete Identifikationsnummer enthält, **dadurch gekennzeichnet, dass** es Schritte umfasst, die darin bestehen:
a) - Lärmmessungen an mindestens einem Punkt des Ortes (L₁; L₃; L₅; L₆; L₇) mittels mindestens eines Messaufnehmers (4) zu realisieren;
b) - durch ein Bestimmungsmittel, das mindestens ein Erkennungselement (3) umfasst, das mit dem von dem Individuum (2) getragenen Objekt (21) interagiert, den Eintrittszeitpunkt (31) des Individuums (2) an den Ort (L₁; L₃; L₅; L₆; L₇) zu bestimmen;
c) - den Eintrittszeitpunkt (31) einem Rechner (5) mitzuteilen;
d) - die Messungen des Lärms dem Rechner (5) mitzuteilen;
e) - die Messungen des Lärms über die Dauer des Aufenthalts des Individuums (2) an dem Ort (L₁; L₃; L₅; L₆; L₇) zwischen dem Eintrittszeitpunkt (31) und dem Austrittszeitpunkt (32) mittels des oder der Messaufnehmer (4) oder des Rechners (5) zu integrieren;
f) - durch ein Bestimmungsmittel, das mindestens ein Erkennungselement (3) umfasst, das mit dem von dem Individuum (2) getragenen Objekt (21) interagiert, den Austrittszeitpunkt (32) des Individuums (2) aus dem Ort (L₁; L₃; L₅; L₆; L₇) zu bestimmen;
g) - für die Schallexposition des Individuums (2) während des Aufenthalts repräsentative Signale auszugeben.

13. Verfahren nach Anspruch 12, **dadurch gekennzeichnet, dass** der Schritt (g) vor dem Schritt (f) durchgeführt wird.

14. Verfahren nach Anspruch 12, **dadurch gekennzeichnet, dass** der Schritt (f) vor dem Schritt (g) durchgeführt wird.

15. Verfahren nach einem der Ansprüche 12 bis 14, **dadurch gekennzeichnet, dass** es außerdem die Schritte umfasst, die darin bestehen:
m) - die Dauer der physiologischen Erholung zu berechnen, die notwendig ist, um die von dem während seiner Schallexposition empfangenen Lärmdosis bis auf ein Niveau eines vorbestimmten Wertes zu senken;
n) - für die Dauer der physiologischen Erholung repräsentative Signale auszugeben.

16. Verfahren nach einem der Ansprüche 12 bis 15, **dadurch gekennzeichnet, dass** es außerdem einen Schritt (h) umfasst, der darin besteht, die bei dem Schritt g) und/oder bei dem Schritt n) ausgegebenen Signale auf Verlangen des Individuums (2) und/oder zu jedem von dem Rechner (5) vorgegebenen Zeitpunkt und/oder, wenn seine Schallexposition einen vorbestimmten Wert, insbesondere abhängig von einer maßgeblichen Schwelle erreicht oder überschreitet, an eine Schnittstelle (6, 7, 22, 23) zu übertragen.

17. Verfahren nach einem der Ansprüche 12 bis 16, **dadurch gekennzeichnet, dass** es außerdem vorherige Schritte umfasst, die darin bestehen:
i) - Lärmmessungen an mehreren an dem Ort (L₃; L₅; L₆) und entfernt von der Quelle (1) verteilten Punkten zu realisieren;
j) - eine Korrektur der von jedem der Punkte erhaltenen Lärmmessungen zu definieren;
sowie Schritte, die darin bestehen:
k) - in Echtzeit das Individuum (2) an diesem Ort (L₃; L₅; L₆) zu lokalisieren (33-36; 37);
l) - die für Lärmmessungen des Messaufnehmers (4) repräsentativen Werte abhängig von Korrekturen der Lokalisierung (33-36; 37) zu gewichten.

## Claims

1. A device for evaluating the sound exposure of an individual (2) spending time in at least one location (L₁; L₃; L₅; L₆; L₇) exposed to the noise emitted by at least one source (1; 10-18) the individual (2) carrying an object (21)including a specific identification number associated to that individual, **characterized in that** it comprises:
- at least one means for determining moments of entry (31) and of exit (32) of the individual (2) respectively into and out of the location (L₁; L₃; L₅; L₆; L₇), the or each means for determination including at least a recognition member (3) capable of interacting with the object (21) carried by the individual (2) in order to determine the moments of entry and of exit of the individual respectively into and out of the location;
- at least one sensor (4) installed in the location (L₁; L₃; L₅; L₆; L₇) and capable of measuring noise in at least one point of the location (L₁; L₃; L₅; L₆; L₇) ; and
- a calculator (5) capable, on the one hand, of communicating with the or each determination means and of defining the length of time spent by the individual (2) in the location (L₁; L₃; L₅; L₆; L₇) between the moments of entry (31) and of exit (32) and, on the other hand, of communicating with the or each sensor (4) and of defining values representative of the sound exposure of the individual (2) during the time spent, the calculator (5) being capable of emitting signals representative of this sound exposure.

2. The device as claimed in claim 1, **characterized in that** it also comprises an interface (6, 7, 22, 23) capable of receiving the signals and of informing the individual (2) of his sound exposure.

3. The device as claimed in any one of the preceding claims, **characterized in that** the or each determination means is a member (3) for recognizing an object (21) carried by the individual (2).

4. The device as claimed in claim 3, **characterized in that** the or each determination means comprises an apparatus (3) capable of detecting by radio identification a radio tag carried by the individual.

5. The device as claimed in any one of the preceding claims, **characterized in that** the calculator (5) is capable of communicating with means (33-36; 37) for locating the individual (2) in real time in the location (L₃; L₅; L₆) and of weighting the noise measurements according to the position of the individual (2) relative to the sound source or sources (1).

6. The device as claimed in claim 5, **characterized in that** the location means consist of several items of apparatus (33-36) spread out in the location (L₃; L₅) and delimiting elementary spaces, the items of apparatus (33-36) being capable of detecting the movements of the individual (2) between the elementary spaces.

7. The device as claimed in claim 6, **characterized in that** it comprises several sensors (4) spread out in the location (L₅) at the rate of at least one per elementary space, the calculator (5) incorporating the measurements taken by the sensors (4) installed in the elementary spaces consecutively traversed by the individual (2).

8. The device as claimed in any one of the preceding claims, **characterized in that** it comprises means for signaling to the calculator (5) the use by the individual (2) of an individual sound protection means, notably of the headphone or earplug type.

9. The device as claimed in any one of the preceding claims, **characterized in that** it also comprises a central calculator (50) capable of communicating with the calculators (5₁, 5₃, 5₅, 5₆) fitted in several locations (L₁; L₃; L₅; L₆) and of totaling the sound exposures of the individual (2) during consecutive or inconsecutive times spent in the various locations (L₁; L₃; L₅; L₆), the central calculator (50) being capable of applying corrections according to the physiological recovery times separating the times spent and/or according to the medical antecedents of the individual (2).

10. The device as claimed in claim 9, **characterized in that** it comprises means (22, 23; 19', 67) of communication, to the calculator (5) or to the central calculator (50), of the sound exposure received by the individual (2) when he is exposed to the sound emitted by an individual listening means (19), notably a personal mobile player fitted with a headphone or an earphone (26).

11. The device as claimed in claim 9, **characterized in that** it comprises means of communication, to the calculator (5) or to the central calculator (50), of the sound exposure measured by a personal dosimeter worn by the individual (2).

12. A method for evaluating the sound exposure of an individual (2) spending time in at least one location (L₁; L₃; L₅; L₆; L₇) exposed to the noise emitted by at least one source (1) and who carries an object (21) including a specific identification number associated to that individual, **characterized in that** it comprises steps consisting in:
a) - taking noise measurements in at least one point of the location (L₁; L₃; L₅; L₆; L₇) by means of at least one sensor (4);
b) - determining, by a determination means including at least one recognition member (3) interacting with the object (21) carried by the individual (2), the moment of entry (31) of the individual (2) into the location (L₁; L₃; L₅; L₆; L₇);
c) - communicating the moment of entry (31) to a calculator (5);
d) - communicating the noise measurements to the calculator (5);
e) - incorporating the noise measurements over the time spent by the individual (2) in the location (L₁; L₃; L₅; L₆; L₇) between the moments of entry (31) and of exit (32) by means of the sensor(s) (4) or of the calculator (5);
f) - determining, by a determination means including at least one recognition member (3) interacting with the object (21) carried by the individual (2), the moment of exit (32) of the individual (2) from the location (L₁; L₃; L₅; L₆; L₇) ;
g) - emitting signals representative of the sound exposure of the individual (2) during the time spent.

13. The method as claimed in claim 12, **characterized in that** the step g) precedes the step f).

14. The method as claimed in claim 12, **characterized in that** the step f) precedes the step g).

15. The method as claimed in one of claims 12 to 14, **characterized in that** it also comprises the steps consisting in:
m) - computing the physiological recovery time necessary to reduce the dose of noise received by the individual during his sound exposure to the level of a predetermined value;
n) - emitting signals representative of said physiological recovery time.

16. The method as claimed in one of claims 12 to 15, **characterized in that** it also comprises a step h) consisting in transmitting the signals emitted during the step g) and/or during the step n) to an interface (6, 7, 22, 23) at the request of the individual (2) and/or at any moment predefined in the calculator (5) and/or when his sound exposure exceeds or reaches a predetermined value, notably as a function of a normative threshold.

17. The method as claimed in one of claims 12 to 16, **characterized in that** it also comprises prior steps consisting in:
i) - taking noise measurements at several points spread out in the location (L₃; L₅; L₆) and at a distance from the source (1);
j) - defining a correction of the noise measurements received at each of the points;
and steps consisting in:
k) - locating (33-36; 37) the individual (2) in real time in this location (L₃; L₅; L₆);
l) - weighting values representative of the noise measurements of the sensor (4) as a function of the corrections of the location (33-36; 37).
